# EUROPEAN PATENT APPLICATION

(11) **EP 1 239 686 A1**
(43) Date of publication of application: **11.09.2002**
(21) Application number: 01302131.6
(22) Date of filing: 08.03.2001
(51) Int. Cl.: H04Q 7/30

(54) **Improved UMTS radio access network based on the Internet Protocol**

(71) Applicant: LUCENT TECHNOLOGIES INC., Murray Hill, New Jersey 07974-0636 (US)
(72) Inventor: Chen, Xiaobao, Swindon, Wiltshire SN5 5DQ (GB)
(74) Representative: Buckley, Christopher Simon Thirsk

(57) **Abstract**

In a UTRAN for an all-IP UMTS, an RNC 26 is arranged to set up IP tunnels across the Iub interface to the Node Bs 24 it controls, or across the Iur interface to other RNCs 28. Selected transport channels pass through the IP tunnels, encapsulated in IP packets. The transport channels may be multiplexed, or dedicated IP tunnels may be set up for each selected transport channel.

## Description

This invention relates to the use of the Internet Protocol (IP) in the UTRAN, i.e. the Terrestrial Radio Access Network of the Universal Mobile Telephone System (UMTS).

With the rapidly increasing use of IP, which is a simple, unified and cost-effective inter-working technology, IP has become one of the key transport and inter-working protocols in UMTS. Attempts have been made to replace the Asynchronous Transfer Mode (ATM)-based bearer in the UTRAN, with the aim of improving transport efficiency, maintaining Quality of Service (QoS) for both signaling and user data as well as maintaining control flexibility, and scalability of IP.

One technique which has been used is Lightweight Internet Protocol Encapsulation (LIFE) using User Data Protocol IP (UDP/IP), which has the disadvantage that it multiplexes multiple radio frames at the user level over UDP which adds control complexity. Another technique is Point to Point Protocol (PPP) multiplexing, in which PPP is used to carry multiple user data frames, which has the disadvantage that it applies only to point-to-point links between the Radio Network Controller (RNC) and the Node B so it's use is limited.

An object of the present invention is to provide a technique which allows simple and effective transparent transport of user traffic and signaling in the UTRAN, facilitating the achievement of IP UTRAN, and providing an end-to-end IP solution to future UMTS architectures.

According to the invention a UTRAN comprising at least one first Radio Network Controller and at least one Node B associated with said Controller across an Iub interface, the Controller and the Node B operating Internet Protocol, characterized in that, when there is a requirement for signaling and/or data traffic to cross the Iub interface, the Radio Network Controller is arranged to set up at least one IP tunnel across the Iub interface, and signaling/data information are encapsulated in IP packets.

Preferably a similar IP tunnel is also arranged across the Iur interface between the first Radio Network Controller and a further Radio Network Controller.

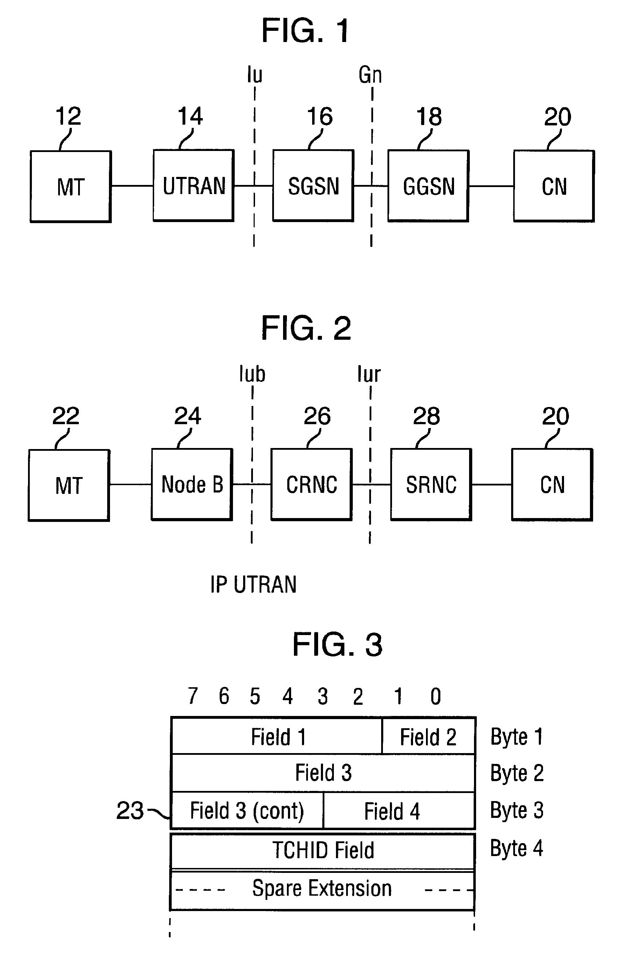

In the figures, Figure 1 illustrates the prior art UTRAN in the UMTS.

The invention will be described with reference to figures 2 to 6 in which:-
Figure 2 shows the components of an all IP UTRAN and its interfaces;
Figure 3 shows the expanded channel frame structure with the inventive Transport Channel ID (TCHID);
Figure 4 illustrates schematically the control plane of an all-IP UTRAN interface;
Figure 5 shows the Iub interface protocol structure; and
Figure 6 shows the logical model of an all-IP Node B for Frequency Division Duplex (FDD).

Figure 1 shows a conventional arrangement of a part of the UMTS. A Mobile Terminal (MT) 12 connects to a UTRAN 14. The UTRAN connects across an Iu interface to a Serving GMTS Support Node (SGSN) 16, which connects across an interface to a Gateway GMTS Support Node (GGSN) 18. The GGSN 18 connects to the Core Network (CN) 20.

Figure 2 shows a part of the Figure 1 network, i.e. the UTRAN and adjacent components. MT 22 is supported by Node B 24 which is controlled over an Iub interface by a Controlling Radio Network Controller (CRNC) 26. CRNC 26 communicates across an Iur interface with a Serving RNC 28, which is connected to CN 22. Node B 24 and CRNC 26 together constitute the UTRAN, which is now an IP UTRAN.

In the inventive IP UTRAN, IP tunneling is used across the Iub and Iur interfaces. IP packets are used to encapsulate the Session Data Units (SDUs) and Protocol Data Units (PDUs) of layers 2 and higher protocol layers over the two interfaces. Both signaling and user data are included.

The IP-based Iub/Iur interface protocol stack is :-

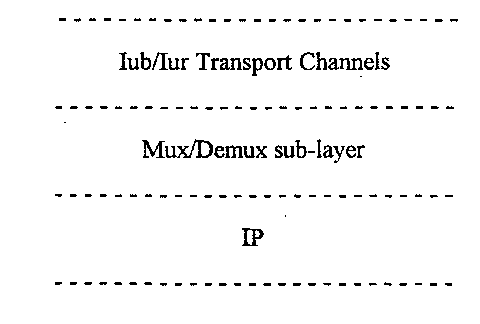

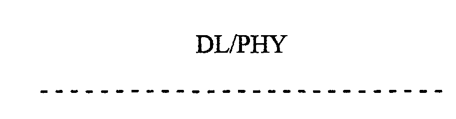

where DL is Down Link and PHY is the Physical Layer (???)

The transport channels in the interface protocol stack are the conventional ones in UMTS/GPRS, i.e. the Dedicated Channel (DCH); Forward Access Channel (FACH); Random Access Channel (RACH); Common Pilot Channel (CPCH); Downlink Shared Channel (DSCH); and Uplink Shared Channel (USCH).

The selection of a transport channel for the tunneling of IP packets is performed by the conventional packet scheduler in CRNC 26, the selection being based on factors including
servers type or bearer parameters, for example delay requirements
data amount
load of the common channels and shared channels
interference levels in the air interface
radio performance of different transport channels.

For dedicated network links between Node B 24 and CRNC 26, a common IP channel can be used to tunnel both user and signaling traffic through the Iub interface. For example, for the user plain of Iub, the transport channels (as listed above) can be multiplexed through the same IP tunnel by using the existing raw IP transport option available in IPv4/IPv6. Multiplexing information is attached to the data frame in each channel. Demultiplexing of the different transport channels uses the data frame information.

The advantage of multiplexing the transport channels is the conventional one, i.e. IP packets have headers which are a minimum 20 bytes long. Radio frames can be very much shorter, so multiplexing provides efficiency.

The advantage of IP tunneling is that fixed IP addresses can be used, as is conventional. Once a tunnel is in place, conventional IP routing is used.

In one possible arrangement, the spare bits after the Session Data Unit (SDU) length are used to carry the Transport Channel ID (TCHID). Typical codes are:-
001:RACH
010:CPCH
O11: .....

In an alternative arrangement shown in Figure 3, a one-byte field 23 is allocated in the common header structure of the channel frames. The TCHID field in byte 4 is used by the mux/demux sub layer of the protocol stack to identify and demultiplex different transport channels which have passed through the shared IP tunnel.

Instead of a shared IP tunnel, another possibility in the inventive IP UTRAN is to use a dedicated IP tunnel, i.e. a specific IP tunnel is set up across the Iur or Iub interface for each of the transport channels. Dedicated IP tunnels are useful when multiple access is required for several channels, for example on soft-handover.

Turning now to the protocol arrangements, the general protocol structure in the conventional UTRAN consists of two main layers, the Radio Network Layer and the Transport Network Layer which is based on ATM. All UTRAN related issues are visible only in the Radio Network Layer. The Transport Network Layer represents standard transport technology which is selected to be used for UTRAN without any UTRAN-specific requirements. Both have their specific User Plane and Control Plane. The Data Bearers in the Transport Network User Plane are directly controlled by the Transport Network Control Plane during real time operation, but the control actions required for setting up the Signaling Bearers (s) for Application Protocol (i.e. Radio Access Network Application Protocol (ie RANAP), Radio Network Subsystem Application Protocol (RNSAP) or Node B Application Part NBAP used for setting up bearers i.e. the Radio Access Bearer or Radio Link are considered O&M actions.

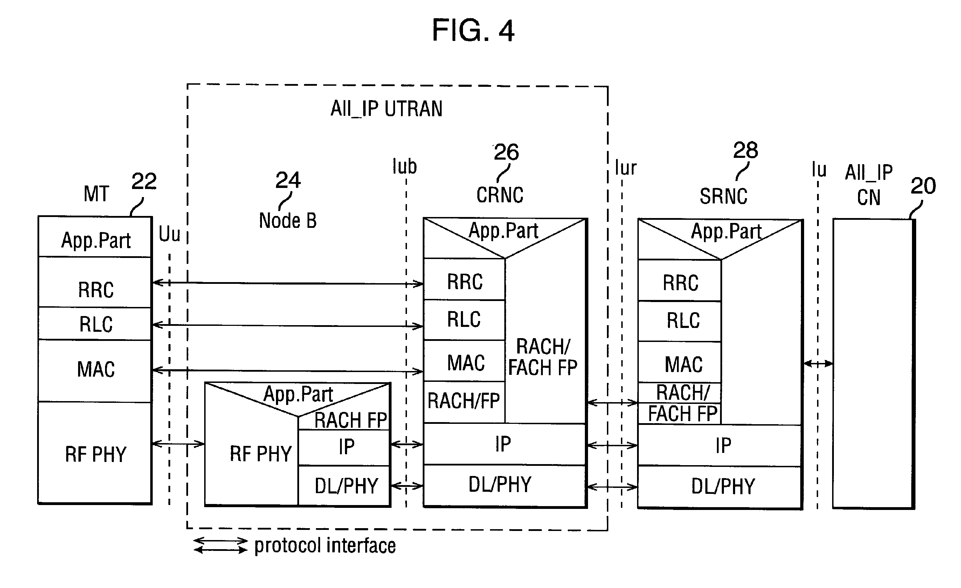

In an all-IP UTRAN, the Transport Network Layer is now based on IP, as are the transport links for the Iu and Iub interfaces. This is illustrated in Figure 4; conventional features including the applications part App.Part; Radio Resource Control; Radio Link Control; Medium Access Control; and Radio Frequency Physical layer are shown in the MT 22, Node B 24, CRNC 26 and SRNC 28. The IP layer is located above the DL/PHY layer.

Considering now the inventive IP Iub interface between Node B 24 and CRNC 26; the information transferred over the interface includes:-
I the Radio Application Related Signaling
II Data Streams

| | |
|---|---|
| i | the Iub/Iur DCH data stream |
| ii | the Iub RACH data stream |
| iii | the Iub FDD CPCH data stream |
| iv | the Iub FACH data stream |
| v | the Iub TDD USCH data stream |
| vi | the Iub PCH data stream |

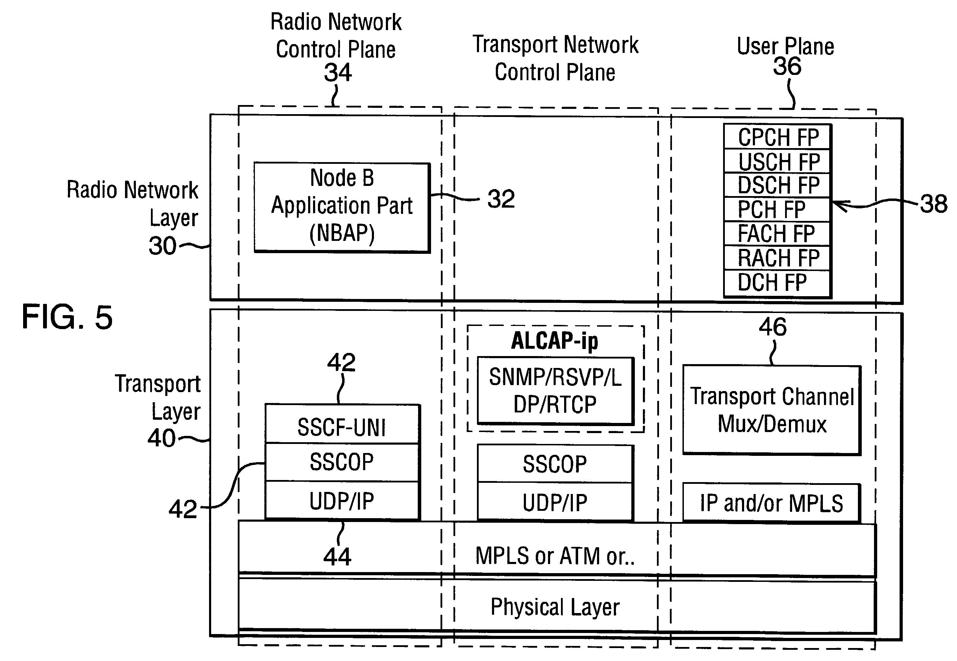

Figure 5 shows the IP Iub interface protocol structure. There are two functional layers. The first is the Radio Network Layer 30 which defines procedures 32 related to the operation of Node B 24. The Radio Network Layer 30 consists of a radio network control plane 34 and a radio network user plane 36; the user plane 36 comprises the F... P... of each of the transport channels shown at 38.

The second functional layer is the transport layer 40 which defines procedures for establishing physical connections between Node B 24 and the CRNC 26 as indicated at 42. The transport layers includes the UDP/IP protocol at 44.

There is one dedicated AAL2 connection for each RACH, for each FACH, and for each CPCH, where AAL2 is a type of Asynchronous Transport Mode (ATM) Adaptation Scheme which allows multiplexing traffic over the same ATM Virtual connection.

The transport channel mux/demux 46 is also shown in the user plane 36.

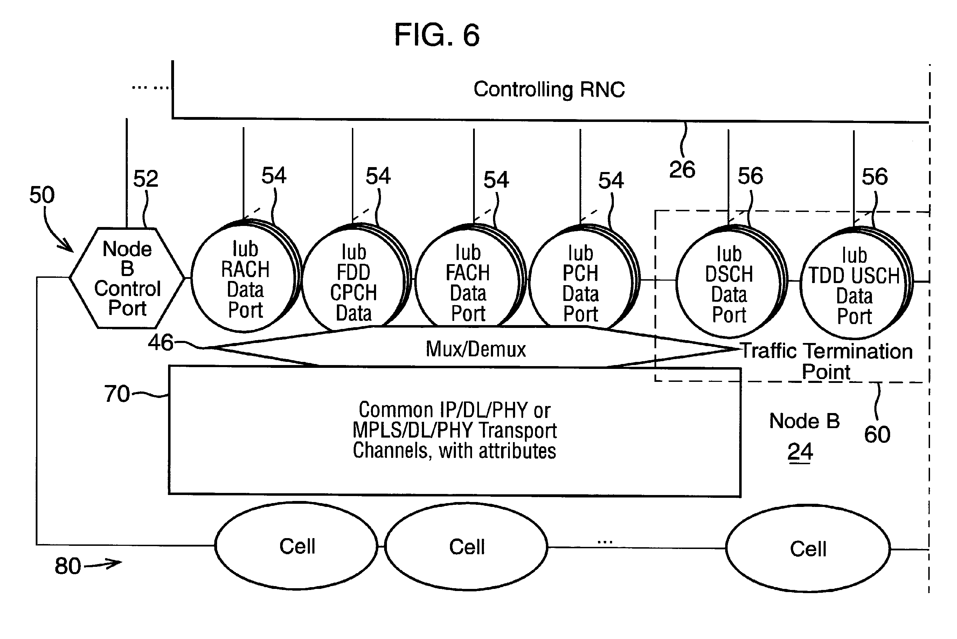

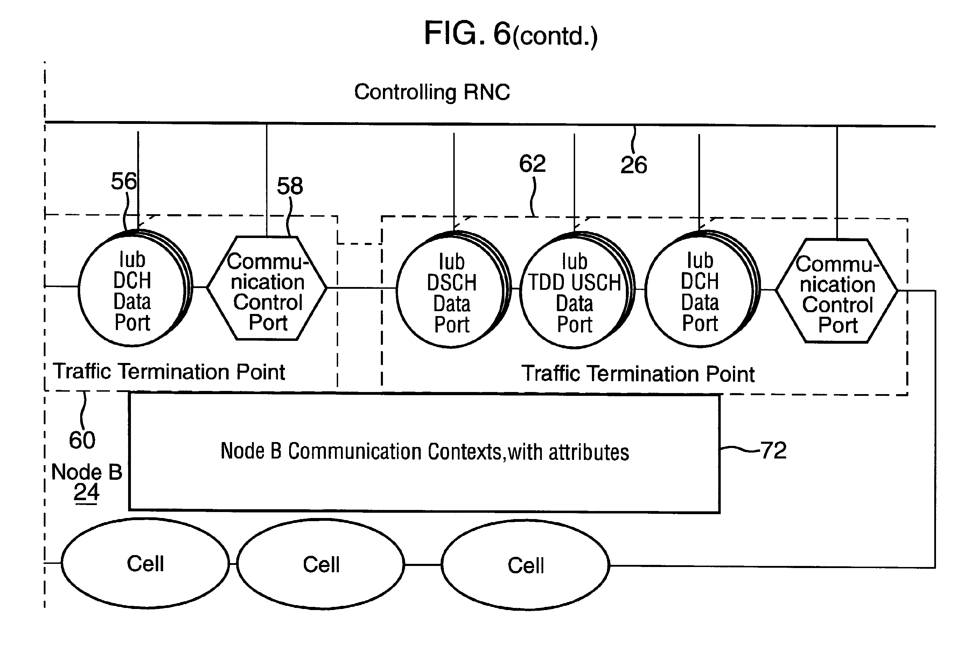

Figure 6 illustrates the infrastructure of an all-IP Node B 24 which deploys IP as a transport and data switching/routing mechanism to and from CRNC 26. Controlling RNC 26 has a number of ports 50, i.e. one port 52 as the Node B control port; one data port 54 for each Iub transport (signaling?) channel, allowing multiplexing/demultiplexing at 46 when a shared IP tunnel is used, and one data port 56 for each Iub (data channel?) providing, together with a communication control point 58, a traffic termination point 60. A second or further traffic termination points 62 may be provided with similar structures.

On the Node B side, the multiplexer 46 links to common IP/DL/PHY or MPLS (Multi Protocol Label Switching) transport channels, as indicated at 70, and the traffic termination points linked to Node B communication context 72. The Node B control port 52 and the communication control port 58 each connect to the cells 80 of Node B 24.

When dedicated IP tunnels are provided across the Iub interface, multiplexer/demultiplexer 46 is omitted but the remaining structure is still used.

When IP tunnels are used to transport the user data and signaling channels across the Iur interface between CRNC 26 and SRNC 28 a very similar arrangement to that of the Iub interface is used.

Although the invention has been described with reference to a single Node B associated with a RNC, simple duplication allows IP tunnels across the Iub interface to two or more Node Bs controlled by one RNC.

The arrangement according to the invention conforms to the general requirement for an all-IP UTRAN in that it supports:
fast and efficient radio resource access and allocation control and management;
no or minimal impact on existing Radio Network Layer functionality of the UTRAN;
open interfaces between Node B and RNC as well as between RNC and CN; and
the QoS requirements of both Signaling Bearers and Data Bearers.

The specific advantage of the tunneling arrangement and use of transport channels are that there is flexibility of providing both point-to-point links (e.g. PPP) and routed network links between Node B and RNC over the Iub interface, and also over the Iur interface between RNCs.

## Claims

1. A Terrestrial Radio Access Network for the Universal Mobile Telephone System (UTRAN) comprising at least one first Radio Network Controller (26) and at least one Node B (24) associated with said first Controller across an Iub interface, said first Controller and said Node B operating Internet Protocol, **characterized in that**, when there is a requirement for signaling and/or data traffic to cross the Iub interface, the first Radio Network Controller is arranged to set up at least one IP tunnel across the Iub interface and signaling and data information are encapsulated in IP packets.

2. A UTRAN according to Claim 1 in which the first Controller is further arranged to communicate with a further Radio Network Controller (28) across an Iur interface, in which, when there is a requirement for signaling and/or data traffic to cross the Iur interface, the first and the further Radio Network Controllers are arranged to set up at least one IP tunnel across the Iur interface, and signaling and data information are encapsulated in IP packets.

3. A UTRAN according to Claim 1 or Claim 2 in which each IP tunnel carries at least one of the transport channels of the Universal Mobile Telephone System.

4. A UTRAN according to Claim 3 in which the IP tunnel carries at least two transport channels which are multiplexed.

5. A UTRAN according to Claim 4 in which spare bits after the transmission of the Session Data Unit length in the data frame of each IP packet are arranged to carry the identity of at least two transport channels (TCHID).

6. A UTRAN according to Claim 4 in which a one byte field (23) in the common header structure of the channel frames is allocated to carry the identity of the at least two transport channels.

7. A UTRAN according to Claim 3 in which each IP tunnel is dedicated to a specific transport channel.
